# EUROPEAN PATENT APPLICATION

(11) **EP 0 923 036 A1**
(43) Date of publication of application: **16.06.1999**
(21) Application number: 97924320.1
(22) Date of filing: 05.06.1997
(51) Int. Cl.: G06F 15/00, G06F 17/60

(54) **TERMINAL, INFORMATION PROVIDING DEVICE, SYSTEM, AND RECORDING MEDIUM**

(30) Priority: 05.06.1996 JP 16367996; 11.06.1996 US 19452 P
(71) Applicant: Aim Corporation, Shinbayashi, Chiryu-shi, Aichi 472 (JP)
(72) Inventor: ITAKURA, Yuichiro, Hyper Net Inc., Shibuya-ku, Tokyo 150 (JP); TSUTSUI, Yuichiro, Hyper Net Inc., Shibuya-ku, Tokyo 150 (JP); FUJITA, Nobuyuki, Hyper Net Inc., Shibuya-ku, Tokyo 150 (JP)
(74) Representative: von Bülow, Tam, Dr.
(86) International application number: JP9701907
(87) International publication number: WO9746946

(57) **Abstract**

To provide a terminal with which user can pay safely using communication network, the terminal has a browser for communicating with World Wide Web and a message viewer for communicating with a private network. The browser includes means for ordering goods from a host computer connected to World Wide Web, means for receiving a bill for the goods from World Wide Web, and means for transmitting the bill to the message viewer. The message viewer includes means for paying the bill through the private network.

## Description

### 1. Field of the Invention

This invention relates to a display system, which displays information obtained from a communications network, such as World Wide Web, and a method for displaying such information. For those designated countries, which permit the incorporation by reference, the following patent applications are hereby incorporated by reference.
1. Appln. No. H8-9521 filed on January 23, 1996
2. Appln. No. H8-67278 filed on February 28, 1996
3. Appln. No. H8-139689 filed on May 10, 1996
4. Appln. No. H8-139690 filed on May 10, 1996
5. Appln. No. H8-163679 filed on June 5, 1996

### 2. Description of Related Art

The World Wide Web users can communicate with a variety of host computers in World Wide Web through a host computer (information provider) offered by a provider. Recently, many virtual shops are formed in World Wide Web. Users can buy goods by mail-order through World Wide Web. Programs and data are also sold through World Wide Web. User can pay for the goods by the credit card by transmitting the credit card number and the expiration date.

However, information is transferred through many host computers in World Wide Web, and the security for the information is poor. Especially, when transmitting the credit card number and the expiration date through World Wide Web, such information can be misused, which is undesirable to the user. Therefore, this invention aims to solve the problem and to provide a terminal, information provider, system and recording medium, which allow safe payment in mail-order business through a computer communications network.

### SUMMARY OF THE INVENTION

To overcome the above issue, according to the first aspect of the present invention, a terminal has a browser for communicating with World Wide Web, and a message viewer for communicating with a private network. The browser includes means for ordering goods from a host computer connected to World Wide Web, means for receiving a bill for the goods from World Wide Web, and means for transmitting the bill to the message viewer. The message viewer pays the bill through the private network.

According to the second aspect of the present invention, the message viewer further includes means for receiving information indicative of payment completion from the private network. The message viewer transmits the information indicative of payment completion to the browser. The browser notifies the host computer of the payment completion through World Wide Web.

According to the third aspect of the present invention, the terminal has a browser for communicating with World Wide Web, and a message viewer for communicating with a private network. The message viewer orders goods through a private network and receives a bill for the goods from the private network. The message viewer pays the bill through the private network and transmits the information that the order and the payment have been completed to the browser. The browser notifies World Wide Web of the completion of the order and the payment.

According to the fourth aspect of the present invention, the message viewer transmits a credit card number and an expiration date of the terminal user to the private network during the payment.

According to the fifth aspect of the present invention, the information provider has a gateway through which a terminal accesses World Wide Web, a connection manager for managing the communication which is conducted through the gateway, and a message manager connected to a payment system for paying through a private line. The gateway transmits goods order input through the terminal to a host computer connected to World Wide Web and transmits a bill for the goods from the host computer to the terminal through World Wide Web. The message manager includes request means for requesting through the private line the payment system to pay the bill.

According to the sixth aspect of the present invention, the message manager receives information indicative of payment completion from the payment system. The gateway notifies the host computer of the payment completion through World Wide Web.

According to the seventh aspect of the present invention, the information provider has a gateway through which a terminal accesses World Wide Web, a connection manager for managing the communication which is conducted through the gateway, and a message manager connected to a payment system for paying through a private line. The message manager transmits goods order, which was input through the terminal, to the payment system, transmits a bill for the goods from the payment system to the terminal, and requests the payment system through the private line to pay the bill. The message manager receives information indicative of payment completion from the payment system. The gateway notifies the host computer of the payment completion through World Wide Web.

According to the eighth aspect of the present invention, the message manager transmits the payment completion to the connection manager. The connection manager makes the World Wide Web gateway notify the host computer of the payment completion.

According to the ninth aspect of the present invention, the information provider transmits the credit card number and the expiration date of the terminal user to the payment system.

According to the tenth aspect of the present invention, a system executes payment for goods ordered through World Wide Web by a user of a terminal. The system has a user database for storing the credit card number and the expiration date owned by the user in advance, an interface for connecting to a private network (closed network) which executes payment by credit card.

The system connects to the terminal using a private network, and receives information indicative of a paying request, the amount of payment and the store dealing in the goods from the terminal through the private network. The system also receives the credit card number and the expiration date from the user database and transmits the information indicative of the amount of payment and the store dealing in the goods, together with the credit card number and the expiration date. The system receives information indicative of that the credit card has been verified.

According to the eleventh aspect of the present invention, a system executes payment for goods ordered by a user of a terminal through a network. The system has a user database for storing the credit card number and the expiration date owned by the user in advance. The system also has an interface for connecting to a private network (closed network) which executes payment by credit card. The system connects to the terminal using a private network, and receives from the terminal, through the private network, an order for the goods to the store which is dealing in the goods. The system also transmits a bill for the order to the terminal through the private network and receives a confirmation about the bill from the terminal through the private network. The system reads out the credit card number and the expiration date from the user database, and receives information indicative of that the credit card has been verified from the private network.

According to the twelfth aspect of the present invention, the system further has a store database for storing a goods store name, in association with the connection address of the host computer of the store. The system reads out the connection address of the host computer, which is identified by the store name, from the store database, and connects to the host computer using the connection address through the private line. The system notifies the host computer of the information indicative of that the credit card has been verified through the private line.

According to the thirteenth aspect of the present invention, the recording medium stores a program, which works on a CPU of a terminal connected to a public network. The program includes a browser module for causing CPU to communicate with World Wide Web, and a message viewer module for causing CPU to communicate with a private network. The browser module causes CPU to give an order for goods to a host computer connected to World Wide Web, causes CPU to receive a bill for the goods from World Wide Web, and causes CPU to transmit the bill to the message viewer. The message viewer module causes CPU to execute payment for the goods using the private network.

According to the fourteenth aspect of the present invention, the message viewer module further causes CPU to receive information indicative of payment completion from the private network, and causes CPU to transmit the payment completion to the browser module. The browser module further causes CPU to notify the host computer of the payment completion through World Wide Web.

According to the fifteenth aspect of the present invention, the program comprises a browser module for causing CPU to communicate with World Wide Web, and a message viewer module for causing CPU to communicate with a private network. The message viewer module causes CPU to give an order for goods to the private network, and causes CPU to receive a bill for the goods from the private network. The message viewer also causes CPU to execute payment for the goods through the private network and causes CPU to indicate that the order and the payment have been completed to the browser. The browser module causes CPU to notify World Wide Web of the completion of the order and the payment.

According to the sixteenth aspect of the present invention, the message viewer module causes CPU to transmit the credit card number and the expiration date of the terminal user to the private network during the payment process.

### BRIEF DESCRIPTION OF DRAWINGS

Fig. 1 is a block diagram showing the hardware structure of the overall communication system of the first embodiment of the invention.
Fig. 2 is a block diagram showing the hardware structure of the terminal 10.
Fig. 3 is a block diagram showing the functional structure of the software executed by CPU 40 of the main body 14.
Fig. 4 illustrates an example of the display screen of the display 12.
Fig. 5 is a block diagram showing the hardware structure of the connection manager 23, message manager 24 and host computer 30.
Fig. 6 is a block diagram showing the hardware structure of the message distribution system 39.
Fig. 7 illustrates an example of the structure of the store database 33.
Fig. 8 illustrates an example of the structure of the message user database 34.
Fig. 9 illustrates an example of the structure of the transmittal condition database 36.
Fig. 10 is a diagram showing the connection sequence of the terminal 10 to World Wide Web 32 and to the message distribution system 39.
Fig. 11 is a diagram showing the goods ordering sequence of the first embodiment.
Fig. 12 is a diagram showing the payment sequence of the first embodiment.
Fig. 13 is a diagram-showing the goods ordering sequence of the second embodiment.
Fig. 14 is a diagram showing the payment sequence of the second embodiment.
Fig. 15 is a diagram showing the payment sequence of the third embodiment.
Fig. 16 is a diagram showing the payment sequence of the fourth embodiment.
Fig. 17 is a diagram showing the payment sequence of the fifth embodiment.
Fig. 18 shows the overall structure of the communication system of the sixth embodiment.
Fig. 19 is a diagram showing the payment sequence of the sixth embodiment.
Fig. 20 is a diagram showing the payment sequence of the seventh embodiment.
Fig. 21 shows the overall structure of the communication system of the eighth embodiment.
Fig. 22 is a diagram showing the goods ordering sequence of the eighth embodiment.

### PREFERED EMBODIMENTS OF THE INVENTION

The preferred embodiments of the present invention will be described with reference to the drawings.

### (Embodiment 1)

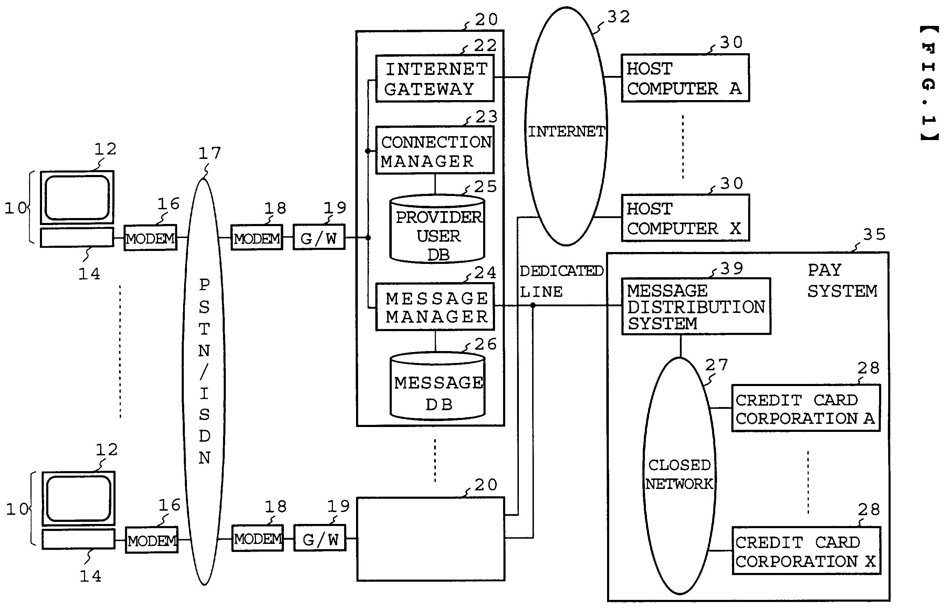

Fig. 1 shows the overall structure of the communication system of the first embodiment. One or more terminals 10 are connected to each information provider 20 through the modems 16 and 18, the public network 17 and the public network gateway 19. The information provider 20 is administered by a so-called World Wide Web provider, and is connected to a plurality of host computers 30 through the Internet (World Wide Web) 32. The information provider 20 is also connected to the payment system 35 through a private line.

In the payment system 35, the message distribution system 39 is connected to the computer of a credit card company through the closed network (private network) 27, such as CAFIS™ (preliminary communications network: a network for connecting the host computer of a credit card company with the user terminal of the host computer) . The message distribution system 39 is also connected to a plurality of information providers 20 through a private line.

The message distribution system 39 transmits information (i.e., message) regarding goods, such as advertisement, which is offered by a store selling goods on the network, to the terminal 10 through the information provider 20. Message includes still image, dynamic image, voice sound, and combinations thereof. Each message contains data, which represents the home page address of the store on World Wide Web (WWW). The message manager 24 of the information provider 20 stores the message received from the message distribution system 39 in the message database 26 in association with the ID number of the message (message URL).

The host computer 30 stores a home page of each store (and its lower page). The terminal 10 can receive information, such as a home page, from World Wide Web 32 through a World Wide Web gateway 22 of the information provider 20. The user can order goods by accessing the home page and the lower page of the store dealing in the goods. The terminal 10 can also receive the message from the message manager 24. The message manager 24 reads a message from the message database 26 based on a request from the terminal 10, and transmits the message to the terminal 10. Each user has an ID and a password for connecting to the World Wide Web gateway 22 through the public network gateway 19 (i.e., provider user ID and password), as well as an ID and a password for obtaining a message from the message manager 24 (i.e., message user ID and password).

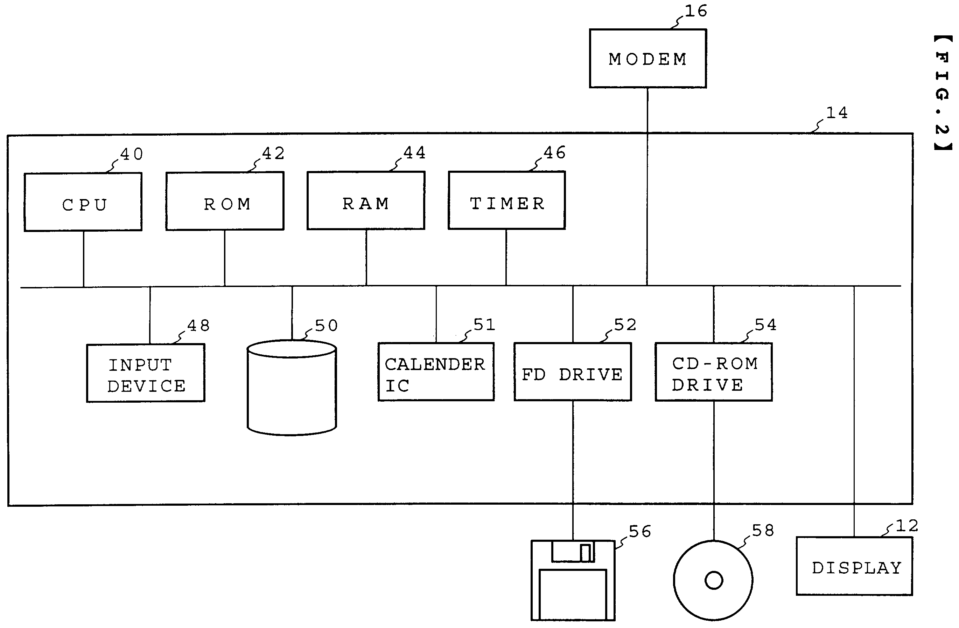

Fig. 2 shows the hardware structure of the main body 14 of the terminal 10. The CPU 40 operates based on the programs stored in the ROM 42 and the RAM 44. The timer 46 counts a predetermined period. The user inputs data through the input device 48. The hard disk drive 50, which is an example of the storage, stores data (e.g., image data), user information, and programs to be operated by CPU 40.

The calendar IC 51 is backed up by the battery, and provides the current time and date to CPU 40. The floppy disk drive 52 reads data or program from the floppy disk 56 and provides them to CPU 40, while the CD-ROM drive 54 reads data or program from the CD-ROM 58 and provides them to CPU 40. The main body 14 has an interface for connecting to the modem 16 and the display 12.

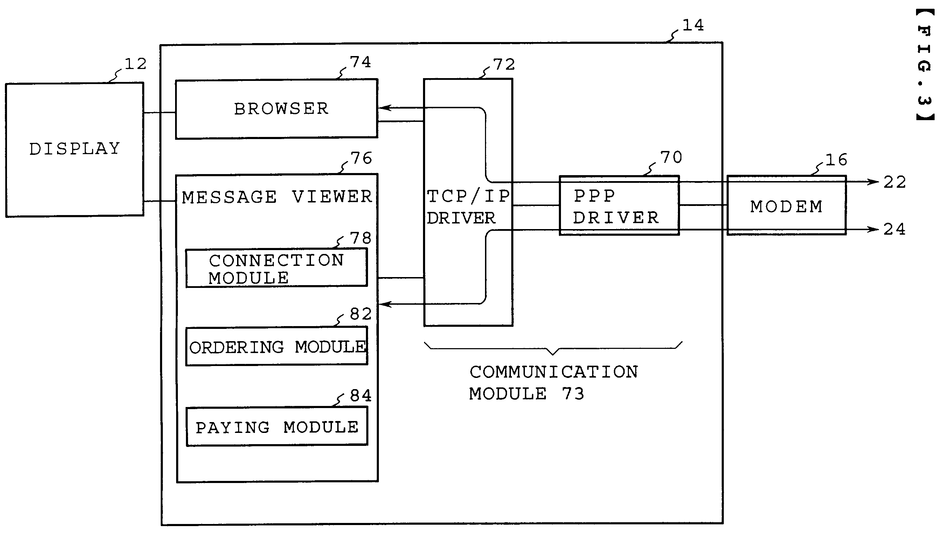

Fig. 3 shows the functional structure of the software which is executed by CPU 40. The software is provided to the user in the form of data stored in the recording medium such as a floppy disk 56 or CD-ROM 58. The software stored in the recording medium may be compressed or may not be compressed. The software is installed in the hard disk drive 50 from the recording medium, and is read out by the RAM 44 to be executed by CPU 40.

The software stored in the recording medium and provided to the user (that is, the software to be installed in the hard disk drive 50) contains the communication module 73 composed of the PPP driver 70 and the TCP/IP driver 72, the browser 74, and the message viewer 76, as functional elements. The PPP driver 70 creates a data link on a physical line between the public network gateway 19 (Fig. 1). The browser 74 communicates with the gateway 22 through the TCP/IP driver 72 on the data link created by the PPP driver 70. The browser 74 receives the image and displays the image on the display 12. Suitable examples of the browser 74 include Netscape™ and Mosaic™.

The message viewer 76 communicates with the message manager 24 through the TCP/IP driver 72 on the data link created by the PPP driver 70. The message viewer 76 receives the image and displays the image on the display 12. The message viewer 76 contains the connection module 78 used for connecting to the message manager 24, the ordering module 82 used for ordering goods from a store, and the paying module 84 used for paying for the ordered goods.

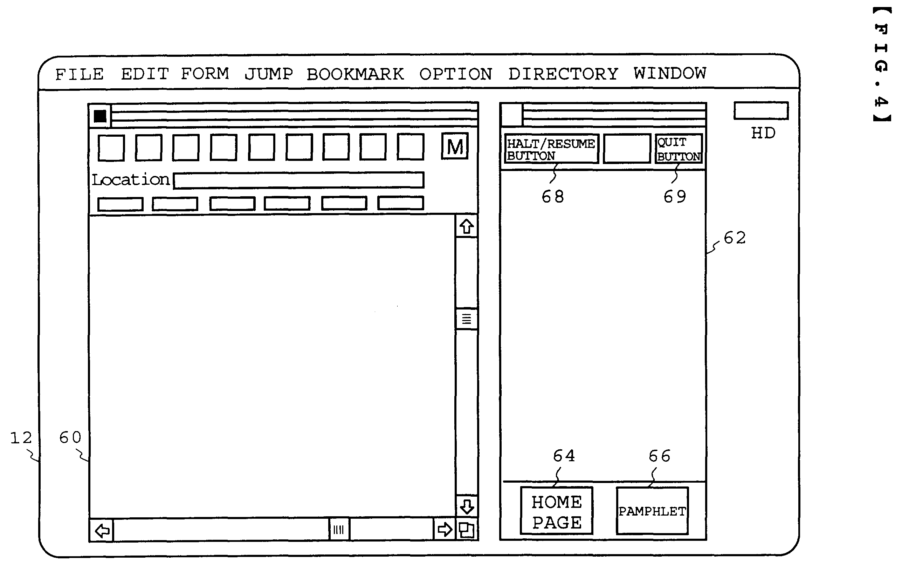

Fig. 4 is an example of the screen displayed on the display 12. The window 60 of the browser 74 (browser window) and the window 62 of the message viewer 76 (message viewer window) open on the display 12. The browser window 60 displays the information received from World Wide Web 32, and the message viewer window 62 displays the information received from the message manager 24. The message viewer window 62 displays new information every predetermined period, for example, every one minute.

The message viewer window 62 has the home page button 64, the information request button 66, halt/resume button 68, and the quit button 69. When the home page button 64 is selected, the home page which corresponds to the message displayed on the message viewer window 62 is displayed on the browser window 60. When the information request button 66 is selected, goods information regarding the message on the message viewer window 62 is transmitted from the message manager 24 and displayed on the message viewer window 62. Each Message or information includes an order button so that user can order the displayed goods.

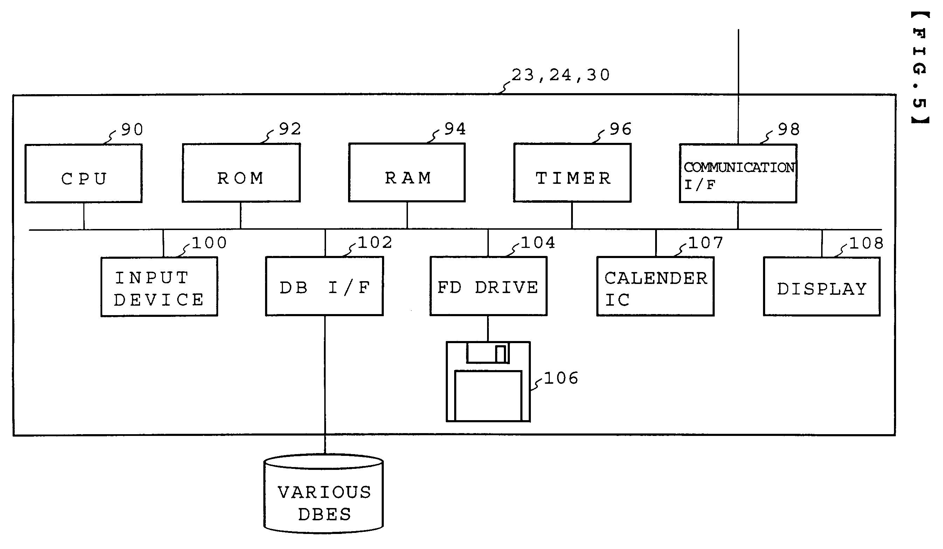

Fig. 5 shows the hardware structure of the connection manager 23, the message manager 24 and the host computer 30. The CPU 90 operates based on the programs stored in the ROM 92 and the RAM 94. The timer 96 counts predetermined periods. The communication interface 98 processes inputs and outputs to and from the public line. Data is input by the user through the input device 100. The database interface 102 can be connected to various databases composed of, for example, hard disk. The floppy disk drive 104 reads the data or program from the floppy disk 56 and transmits it to CPU 90. The calendar IC sends the date and time to CPU 90. The display 108 displays communication state to the operator.

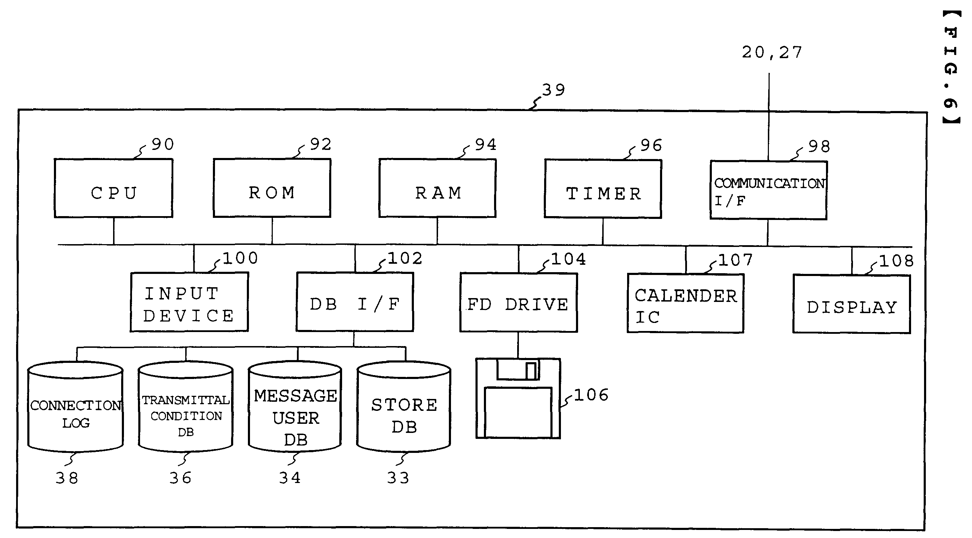

Fig. 6 shows the structure of the message distribution system 39. The same numbers are assigned to the same elements as those in Fig. 5, and the explanation will be omitted. Instead of the communication interface 98, a communication interface for connecting to the private network 27 and a communication interface for connecting to the information provider 20 may be separately provided. The message distribution system 39 includes store database 33, message user database 34 for storing information about the message user of each terminal 10, the transmittal condition database 36 for storing the transmission condition for each message, and the connection log 38 for storing the communication history.

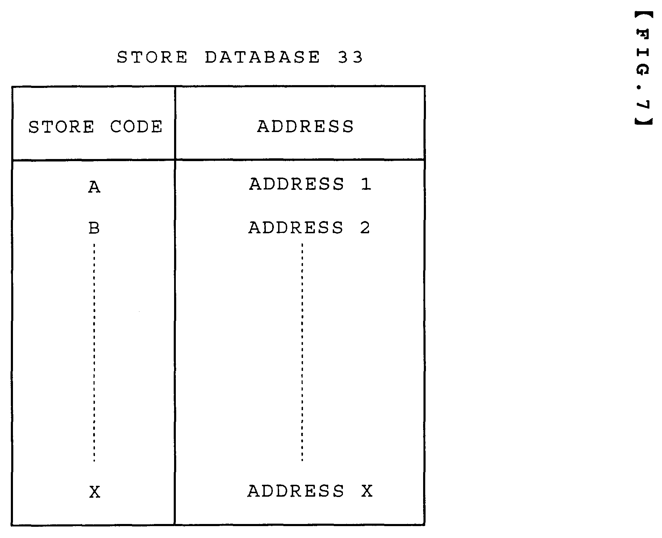

Fig. 7 shows the structure of the store database 33. The store database 33 stores the store code of each store which sells goods on the network, the store code being registered by the credit card corporation 28, and the network connection address representative of the host computer 30 of each store.

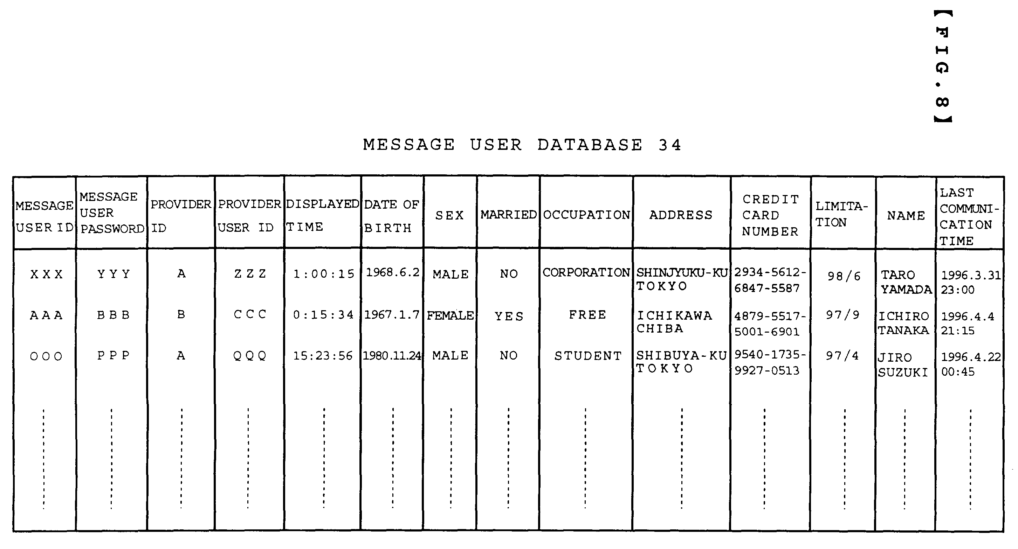

Fig. 8 shows the structure of the message user database 34. The message user database 34 contains message user ID and massage user password for each message, provider ID for identifying each information provider 20, provider user ID for accessing World Wide Web through the provider, message display time, and user information including user's birth date, gender, single or married, occupation, address, etc. The message user database 34 also contains user's credit card number, expiration date, name, and the last communication date.

The user inputs user information to the terminal 10 when he uses the message viewer 76 first time, or when he installs the message viewer 76 in the terminal 10. The terminal 10 stores the user information in the hard disk drive 50, while transmitting the user information to the message manager 24. The message manager 24 transfers the user information to the message distribution system 39, which then stores the user information in the message user database 34. User information may further include user's age, occupation category, income, hobby, etc.

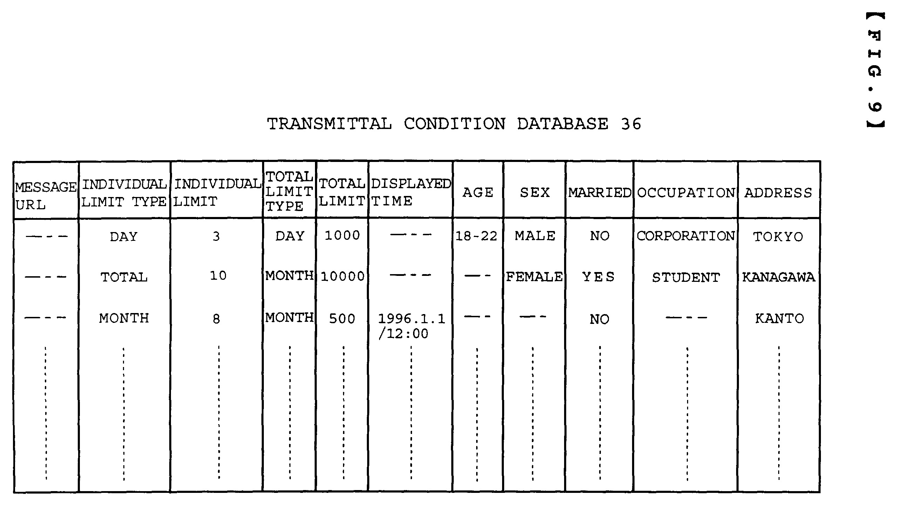

Fig. 9 shows the structure of the transmittal condition database 36. The transmittal condition database 36 stores the message URL for identifying each message, together with the message transmission condition, to associate each message with the corresponding transmission condition. The message transmission condition includes limitation of display frequency to each user, limitation of display frequency to the entire users, message display time, range of age of users suitable to the message, gender, single or married, occupation, address, etc. New search item can be added to the transmittal condition database 36, as necessary. The message distribution system 39 reads the user information from the message user database 34 in response to the request from the terminal 10, and searches the message from the transmittal condition database 36 based on the user information. The message distribution system 39 transmits the URL of the searched message to the terminal 10. Thus, the message URL of appropriate message which suits the user (e.g., advertisement of the goods suitable to the user) can be sent to each terminal 10.

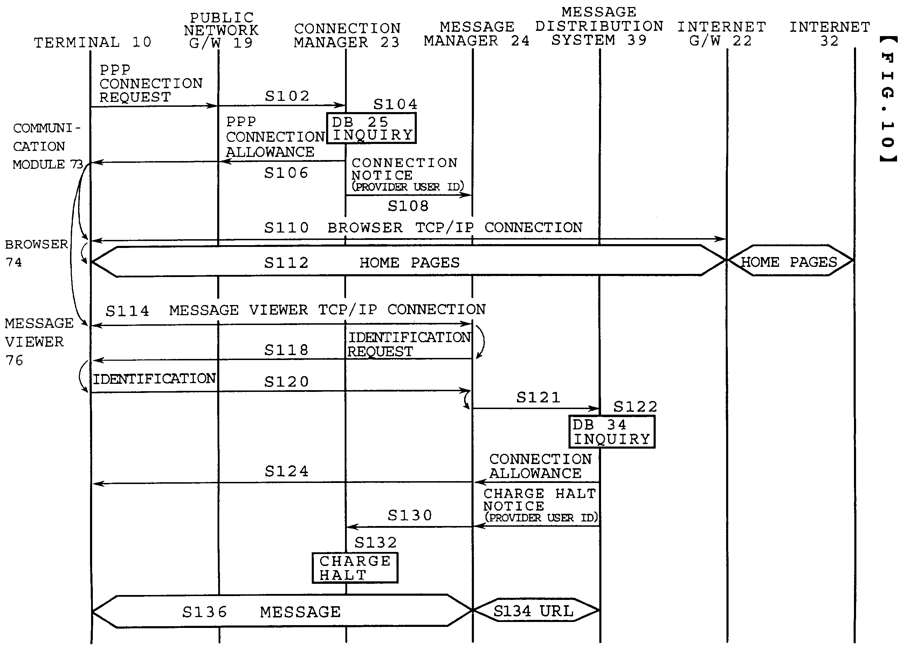

The connection sequences of the terminal 10, the connection manager 23, the message manager 24, the message distribution system 39, the gateway 22 and the Internet 32 will be described with reference to Fig. 10. When the communication module 73 of the terminal 10 requests PPP connection (S102), the connection manager 23 verifies if the provider user ID and the provider user password are registered in the provider user database 25 (S104).

If the ID and the password are registered, the connection manager 23 transmits a PPP connection permission to the terminal 10 (S106). At the same time, the connection manager 23 notifies the message manager 24 of the provider user ID (S108). When the PPP connection is allowed, the browser 74 of the terminal 10 TCP/IP connects to the gateway 22 (S110), and communicates with World Wide Web 32 through the World Wide Web gateway 22 (S112). Meanwhile, the connection module 78 of the message viewer 76 TCP/IP connects to the message manager 24 (S114). Then, the message manager 24 sends a verification request to the message viewer 76 of the terminal 10 (S118).

Upon receiving the verification request, the connection module of the message viewer 76 transmits the message user ID and the password as verification to the message manager 24 (S120). The message manager 24 transmits to the message distribution system 39 the provider user ID received from the connection manager, the message user ID received from the message viewer 76, and the provider ID of the information provider 20 (S121). Then, the message distribution system 39 determines if the received message user ID and the message user password are registered in the message user database 34 (S122). If these are registered, the message distribution system 39 transmits a connection permission to the message viewer 76 (S124).

Next, the message distribution system 39 sends a notification to the connection manager 23 to stop charging on the user who is identified by the provider user ID (S130). In response to the notification, the connection manager 23 stops charging on the user for his usage of the information provider 20 (S132). During stopping the charge, the connection fee is paid to the information provider 20 by the message distribution system 39. On the other hand, the message distribution system 39 bills the message provider, such as a store, for displaying the message. This structure allows the user to access World Wide Web 32 free of charge on the condition that the advertisement of the store is displayed on the message viewer window 62.

Since separate links are set between the browser 74 and World Wide Web 32, and between the message viewer 76 and the message manager 24, respectively, these two can independently communicate. The communication technique between the browser 74 and World Wide Web 32 is known, and the explanation will be omitted here. The message viewer 76 periodically sends a request for message URL to the message distribution system 39 using the timer 46 (S134). When receiving the message URL searched by the message distribution system 39, the message viewer 76 requests the message manager 24 of the message of the message URL (S136).

The message manager 24 searches the message, which corresponding to the received message URL, from the message database 26, and transmits it to the message viewer 76 (S136). The transmitted message includes, for example, advertisement of goods. The user can order any goods among the advertised goods. The communication between World Wide Web 32 and the browser 74 is less expensive. However, the reliability is low because data is transferred through a number of computers in World Wide Web. On the contrary, communications between the message viewer 76 and the message manager 24, and between the message viewer 76 and the message distribution system 39 are conducted through exclusive networks, and the reliability is high.

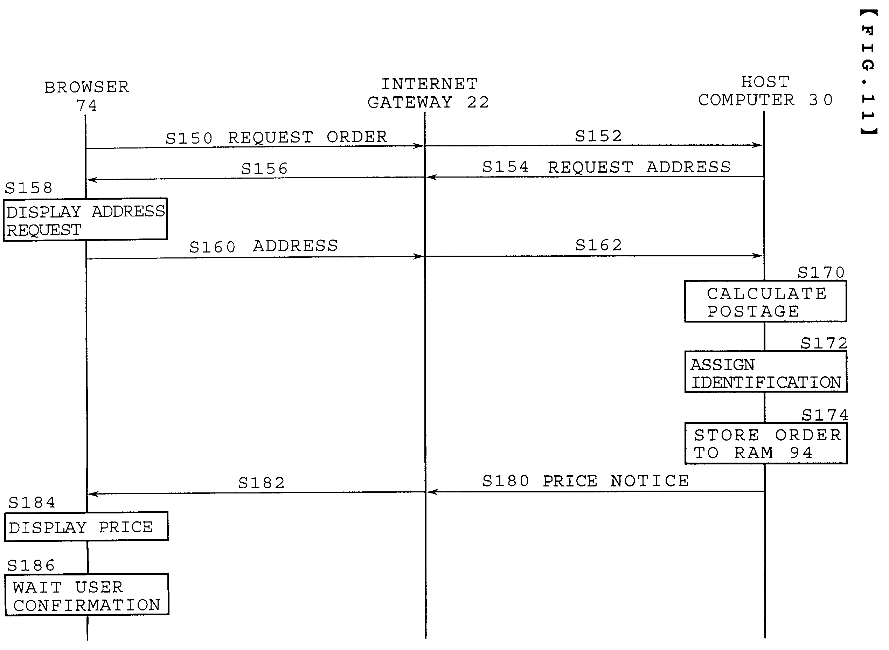

Fig. 11 shows goods order sequence using the system shown in Fig. 1. In the preferred embodiment, the user designates goods that the user wishes to order through the browser 74. The ordering page for the goods is displayed on the browser window 60 by selecting the home page button 64 in the message viewer window 62. Alternatively, the ordering page may be displayed on the browser window 60 by operating on the browser window 60.

The browser 74 transmits the order request, which indicates the goods designated by the user, to the World Wide Web gateway 22 (S150). The World Wide Web gateway 22 transmits the order request to the host computer 30 through World Wide Web 32 (S152). The host computer 30 sends a request for the mailing address and the name of the user to The World Wide Web gateway 22 (S154), which is then forwarded to the browser 74. Upon receiving the address and name request from The World Wide Web gateway 22 (S156), the browser 74 displays a request on the browser window 60 to request the user to input the mailing address and name (S158).

The browser 74 transmits the mailing address and name input by the user to the gateway 22 (S160), which is then transmitted to the host computer 30 (S162). The host computer 30 determined if the goods can be delivered by mail, and if yes, the postage fee is determined (S170). If the goods are delivered by mail, the order ID number is assigned to the order (S172). The order ID number, goods name, mailing address and name are stored in the RAM 94 (S174).

The host computer 30 transmits the order ID number, goods name, mailing address and name, the price of the goods, tax, postage fee, total amount, time taken for delivery, and the store code indicative of the store dealing in the goods, to the gateway 22 (S180), which are then transmitted to the browser 74 (S182). The browser 74 displays this information on the browser window 60 (S184), and waits a confirmation from the user (S186). If the goods are sent only to the user through the communications network, steps S154 through S170 may be omitted. When the user inputs the confirmation, the paying sequence starts.

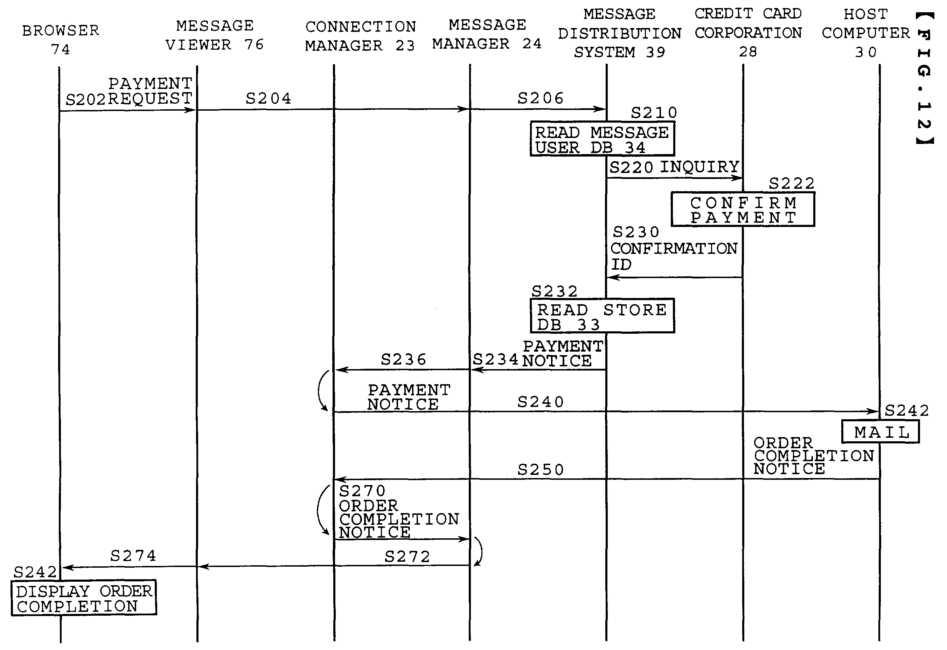

Fig. 12 shows the paying sequence. The action of the message viewer 76 is executed by the paying module 84. The browser 74 transfers the payment request, which indicates the order ID number, total amount and the store code, to the message viewer 76 (S202). The message viewer 76 transmits the payment request to the message manager 24 (S204), which is then forwarded to the message distribution system 39 through the private line (S206). The message distribution system 39 reads out the credit card number, the expiration date and the name of the message user from the message user database 34 (S210).

The message distribution system 39 transmits the total amount, store code, credit card number, expiration date and name to the credit card corporation 28 through the private network 27 to confirm if the credit card is valid (S220). The credit card corporation 28 verifies the credit card. If the credit card is valid, the credit card corporation 28 processes the payment (S222), and transmits the payment acknowledge ID to the message distribution system 39 (S230). The message distribution system 39 reads out the connection address of the store from the store database 33 based on the store code (S232). The message distribution system 39 also transmits a payment notice to the message manager 24, which shows the order ID number, payment acknowledge ID and the connection address (S234). The message manager 24 transmit the received information to the connection manager 23 (S236).

The connection manager 23 transmits the payment notification, which indicates the order ID and payment acknowledge ID, to the host computer 30 represented by the connection address (S240). Then, the host computer 30 reads out the goods name, mailing address and name from the RAM 94 based on the ID number to mail the goods (S242). The host computer 30 also notifies the connection manager 23 of the completion of the order of the goods (S250).

The connection manager 23 notifies the message manager 24 of the completion of the order (S270), which is then transmitted from the message manager 24 to the message viewer 76 (S272). The completion of the order is further transmitted from the message viewer 76 to the browser 74 (S274). The browser 74 displays the information on the browser window 60 (S276).

Even when purchasing goods displayed on World Wide Web page, the user can pay through the message distribution system 39. Since the credit card number and the expiration date are not transmitted through World Wide Web 32, improper use of the credit card number by a third party can be prevented. The reliability of the private line is much higher than that of World Wide Web 32, which can prevent the acknowledge ID, payment notice, or order completion notice from being lost.

### (Embodiment 2)

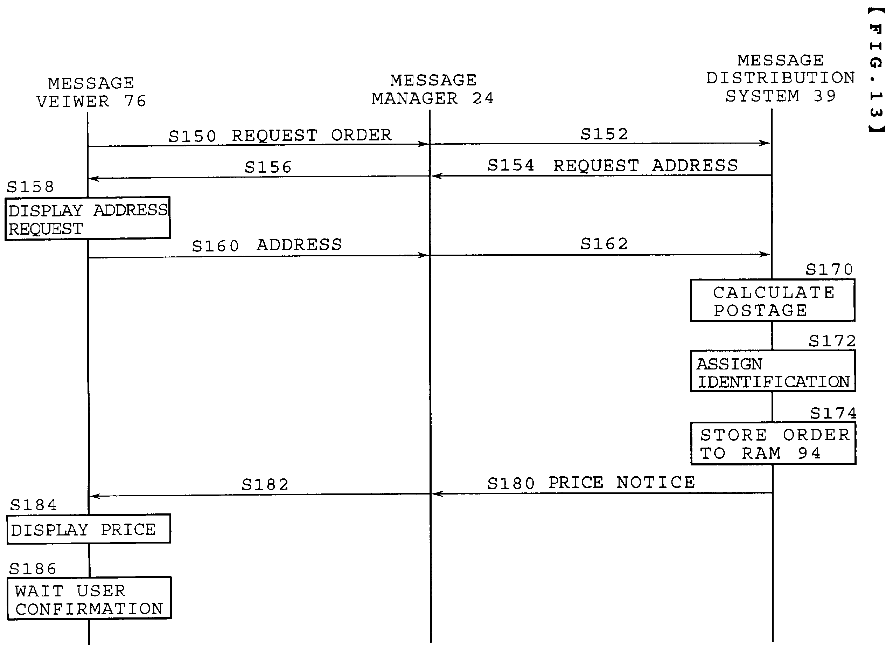

Fig. 13 shows the goods ordering sequence using the message viewer 76. In this embodiment, the message distribution system 39 receives an order for goods. The message viewer 76 sends an order request for goods to the message manager 24 (S150), which is then sent from the message manager 24 to the message distribution system 39 (S152). The message distribution system 39 sends a request for the user's address and name to the message manager 24 (S154), which is sent to the message viewer 76 (S156). Upon receiving the request, the message viewer 76 displays the request for the user's address and name on the message viewer window 62 (S158). When the user input the information, the message viewer 76 transmits the information to the message manager 24 (S160), which is further sent to the message distribution system 39 (S162).

The message distribution system 39 calculates the postage for sending the goods (S170), puts the ID number to the order (S172), and stores the ID number, goods name, and the mailing address in the RAM 94 (S174), while transmitting the information through the message manager 24 (S180) to the message viewer 76 (S182). The message viewer 76 displays the received information including the total amount (S184) and waits the user's confirmation (S186). Compared with Fig. 11, the message viewer 76 in place of the browser 74, the message manager 24 in place of The World Wide Web gateway 22, and the message distribution system 39 in place of the host computer 30 perform the ordering actions.

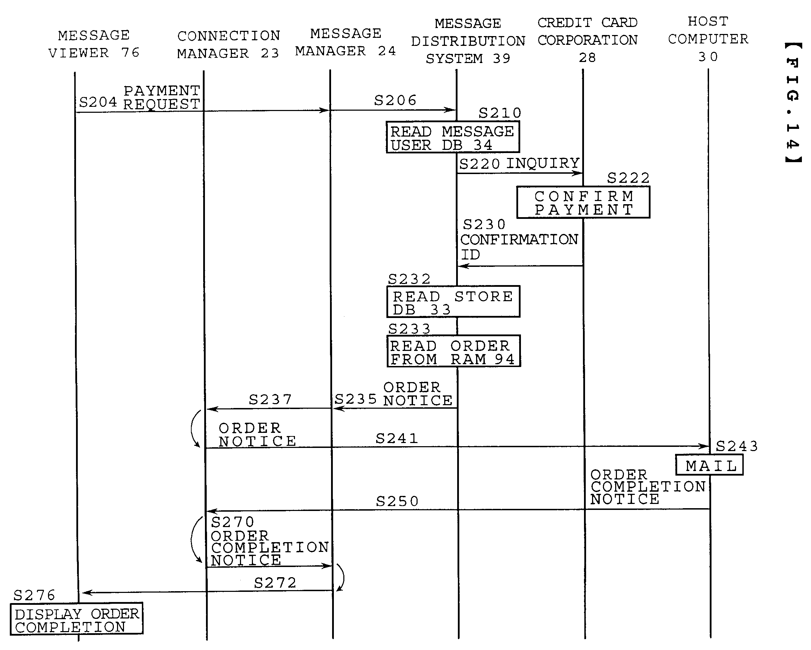

Fig. 14 shows the paying sequence of this embodiment. After the message distribution system 39 reads out the connection address of the store from the store database 33 (S232), the goods name and the mailing address, which have been stored at S160, is further read out from the RAM 94 (S233). The message distribution system 39 also transmits the connection address, the goods name, payment acknowledge ID, and the mailing address to the message manager 24 to notify the order (S235). This information is sent from the message manager 24 through the connection manager 23 (S237) to the host computer 30 (S241). The process hereinafter is the same as Fig. 12, and explanation will be omitted.

When the advertisement of goods is displayed on the message viewer window 62, the user can order goods only by watching the message viewer. For example, if the material, which is sent to the user after selecting the information request button 66, contains advertisement of the goods, the user can directly order the goods on the message viewer. Furthermore, a communication system which allows the ordering operation by either method of the first or second embodiment can be constituted.

### (Embodiment 3)

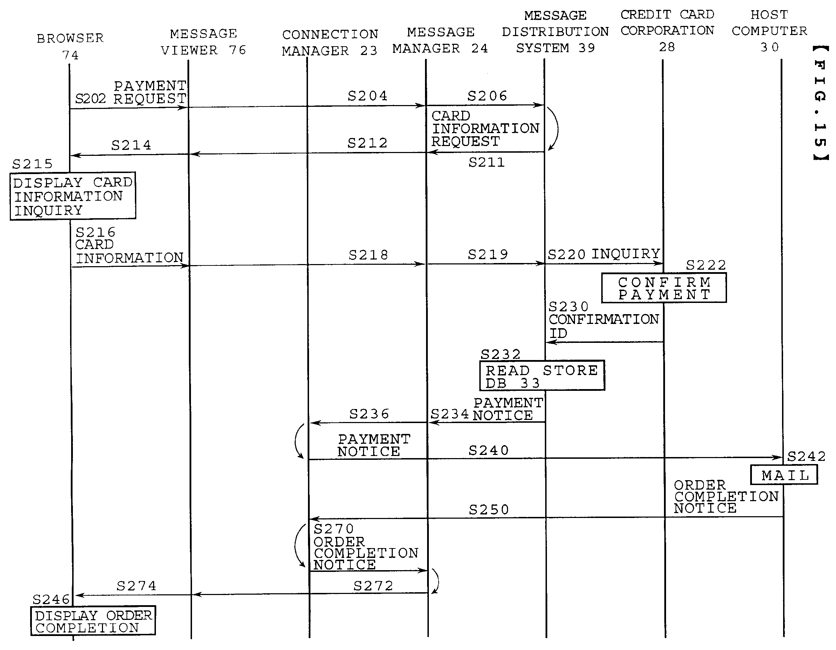

Fig. 15 shows the paying sequence of the third embodiment. The structure other than the paying sequence is the same as the embodiment 1. When the message distribution system 39 receives a payment request (S202, S204, S206), the message distribution system 39 transmits a request for the card information to the message viewer 76 (S211, S212). The message viewer 76 sends the card information request to the browser 74 (S214), and the browser 74 displays the request for the credit card number and the expiration date on the display 12 (S215). When the user inputs the credit card number and the expiration date, the browser 74 transmits the card information to the message viewer 76 (S216). The message viewer 76 transmits the card information to the message distribution system 39 (S218, S219). The process hereinafter is the same as Fig. 12.

In this embodiment, every time a payment request occurs, the user is requested to input the card information. It is not necessary to store the user's credit number and the expiration date in the message user database 34. The user can choose a credit card as he likes every time purchasing goods. In the second embodiment, the credit card number and the expiration date may be checked with the message viewer 76 for each payment, similar to the third embodiment.

### (Embodiment 4)

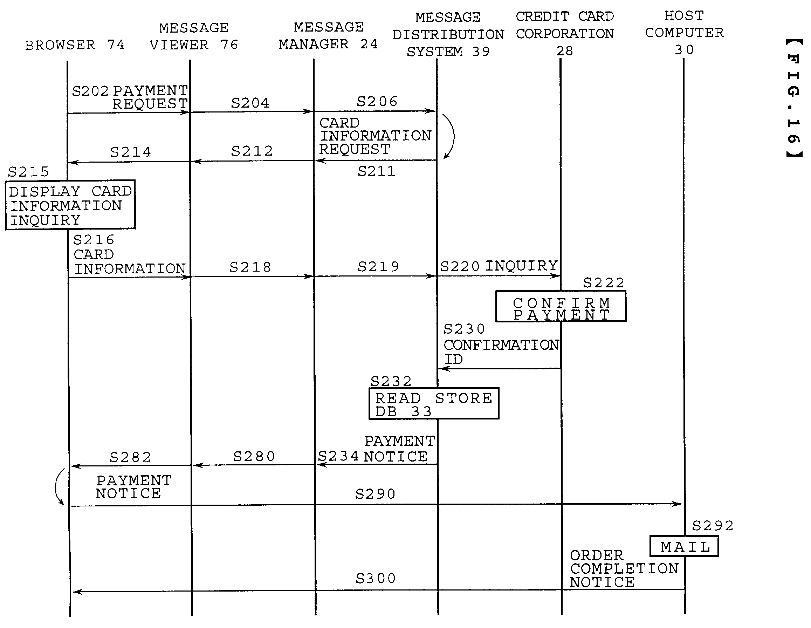

Fig. 16 shows the paying sequence of the fourth embodiment. The structure other than the paying sequence is the same as that of the third embodiment. Also, in the paying sequence, the actions up to reading out the connection address from the store database 33 (S232) are the same as the third embodiment, the explanation will be omitted. The message distribution system 39 reads out the connection address (S232), and notify the message viewer 76 of the payment acknowledge ID and the connection address (S234, S280).

The message viewer 76 transmits the payment acknowledge ID and the connection address to the browser 74 (S282). The browser 74 transmits a payment notice including the payment acknowledge ID to the host computer 30 indicated by the connection address, which shows the payment completion (S290). The host computer 30 executes the delivery process for sending the goods to the address stored in the RAM 94 at S160 (S292), and transmits an order completion notice to the browser 74 to indicate the completion of the order (S300).

Compared with the first and second embodiments, the sequence of this embodiment is simpler, and ordering and paying for the goods can be easily done. Particularly, the process by the message manager 24 is facilitated and is realized without greatly changing the existing system and equipment of the provider. Meanwhile, in the first and second embodiments, the terminal 10 needs not operate between the payment process by the credit card corporation 28 and the delivery process by the host computer 30, and therefore, even when the power source of the terminal 10 is disconnected, the goods are sent out to the user without failure. This can prevent improper withdrawal from the credit card account without sending the goods to the user.

### (Embodiment 5)

In this embodiment, the order receiving operation described in the fourth embodiment is carried out by the message viewer 76. The ordering sequence is the same as the second embodiment (Fig, 13), and the explanation will be omitted.

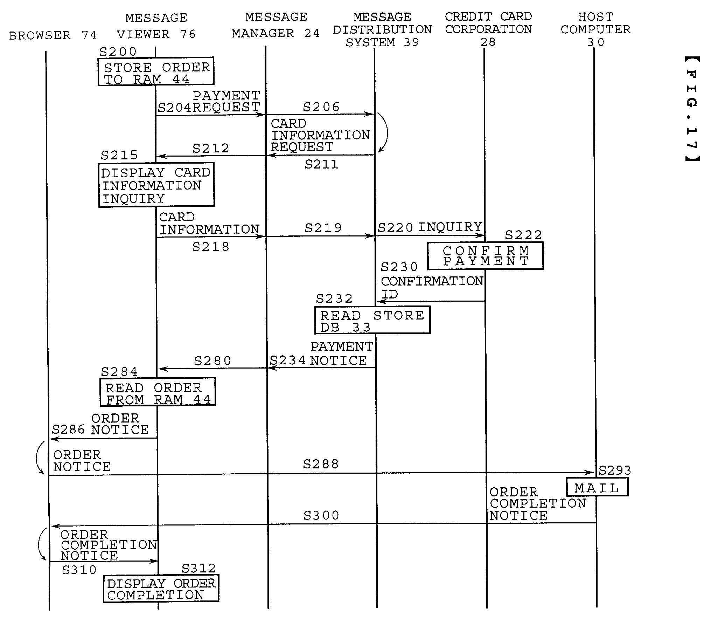

Fig. 17 shows the paying sequence. The message viewer 76 stores the order notified at S182 (Fig. 13) in the RAM 44 (S200). The process hereinafter is similar to that of the fourth embodiment (Fig. 16), and so, only the different points from the fourth embodiment will be described. The card information is input through the message viewer window 62 (S215). Upon receiving the payment notice (S280), the message viewer 76 reads out the order from the RAM 44 (S284). The message viewer 76 also transmits the goods name, the connection address of the store, the payment acknowledge ID, and the mailing address and name to the browser 74 to notify the browser 74 of occurrence of the order (S286).

The browser 74 connects itself to the host computer 30, which is represented by the connection address, to notify the host computer 30 of the order by transmitting the goods name, the payment acknowledge ID, to the mailing address and name to the host computer 30 (S288). The host computer 30 executes the delivery process (S293), and notifies the browser 74 of the completion of the delivery process (S300), which is then transmitted from the browser 74 to the message viewer 76 (S310). The message viewer 76 displays the completion of the order on the message viewer window 62 (S312).

Compared with the fourth embodiment, the burden on the message manager 24 is reduced. Meanwhile, the fourth embodiment has an advantage that improper payment without delivering the goods is prevented even when the power source of the terminal 10 is disconnected at any time. In this embodiment, when the advertisement of the goods is displayed on the message viewer window 62, the user can make an order for the goods simply by watching the message viewer window 62. For example, when the material sent from the information request button 66 contains the advertisement of the goods, the user can directly order the goods on the message viewer window 62.

### (Embodiment 6)

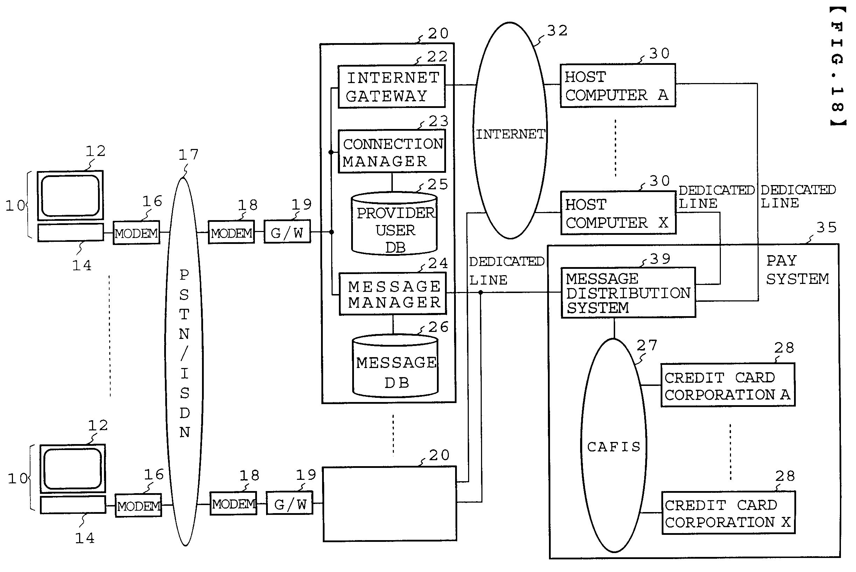

Fig. 18 shows the overall structure of the communication system of the sixth embodiment. The host computer 30 of the store is connected to the message distribution system 39 through the private line. The other portion of the structure is the same as Fig. 1, and the explanation will be omitted. The ordering sequence of this embodiment is the same as that shown in Fig. 11.

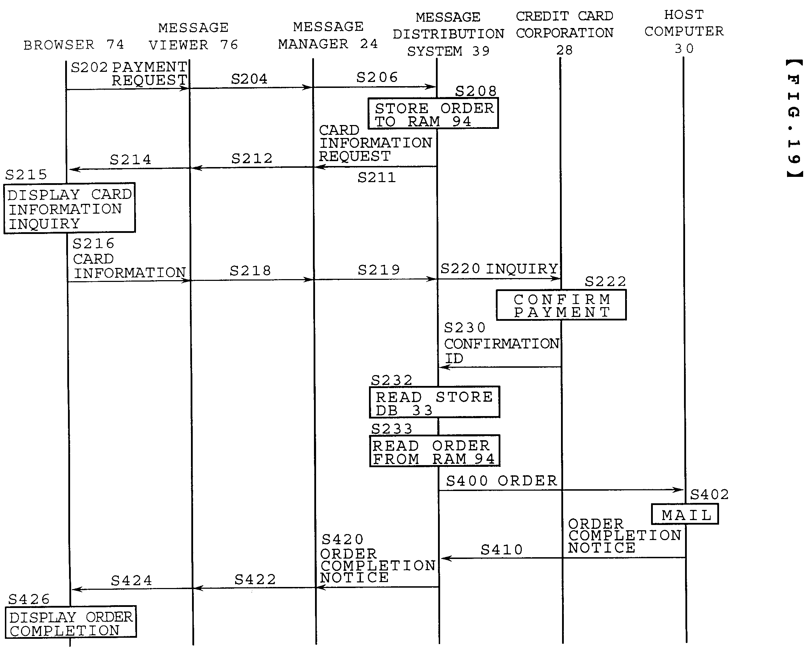

Fig. 19 shows the paying sequence of this embodiment. When payment is requested, the browser 74 notifies the message viewer 76 of the order including store code, the goods name, the total amount, and the mailing address and name (S202). The order is transmitted through the message manager 24 to the message distribution system 39 (S204, S206), and is stored in the RAM 94 of the message distribution system 39 (S208). The credit card verification steps (S211 to S230) and the reading the store database 33 (S232) are the same as the third embodiment, and the explanation will be omitted.

The message distribution system 39 reads out the order from the RAM 94 (S233), and directly notifies the message distribution system 39 of the occurrence of the order by transmitting the connection address and the order to the host computer 30 (S400). The host computer 30 executes the mailing process to mail the goods to the address which are indicated by the order notice (S402). When the host computer 30 transmits a notice of completing the order process to the message distribution system 39 (S410), the message distribution system 39 transmits the notice to the message manager 24 (S420), which is further transmitted to through the message viewer 76 (S422) to the browser 74 (S424). The browser 74 displays the completion of the order on the browser window 60.

In this embodiment, the order for goods is transmitted from the message distribution system 39 to the host computer 30 without passing through the Internet (World Wide Web) 32. This structure can prevent the order from not being transmitted to the host computer 30 due to the accident on World Wide Web 32. The reliability of the private line is relatively high, and a situation where the goods are not delivered in spite of the payment is avoided.

### (Embodiment 7)

In this embodiment, receipt of the order described in the sixth embodiment is executed by the message distribution system 39. The ordering sequence is the same as the second embodiment (Fig. 13), and the explanation will be omitted. The host computer 30 is not connected to World Wide Web 32.

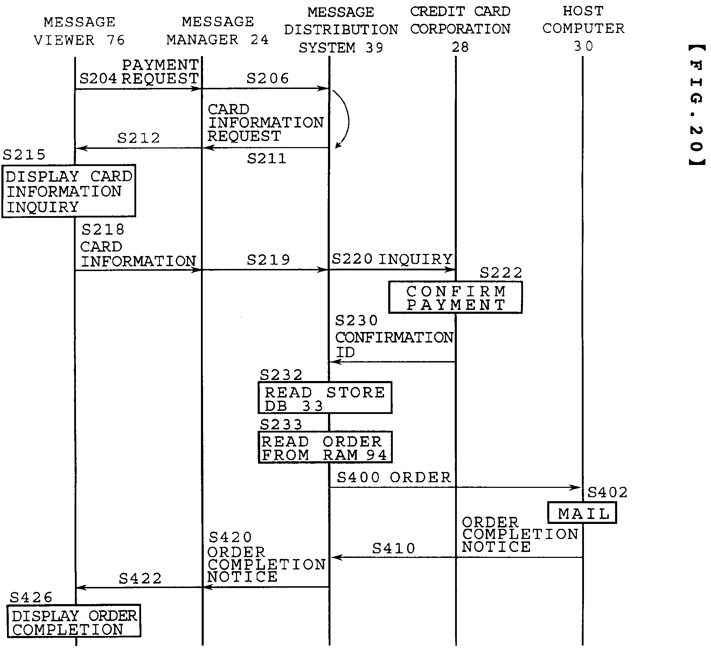

Fig. 20 shows the paying sequence of this embodiment. Compared with the paying sequence of the sixth embodiment (Fig. 19), the browser 74 does not take part in the payment operation. Also, since, in this embodiment, the order is stored in the RAM 94 at S174 of Fig. 13, the order is not transmitted at the payment request step (S204). Only the payment request is transmitted. At S233, order, which was stored at S174, is read out from the RAM 94. The other actions are the same as Fig. 19, and the explanation will be omitted.

When the advertisement of the goods is displayed on the message viewer window 62 of the message viewer 76, the user can order the goods only by watching the message viewer window 62 of the message viewer.

### (Embodiment 8)

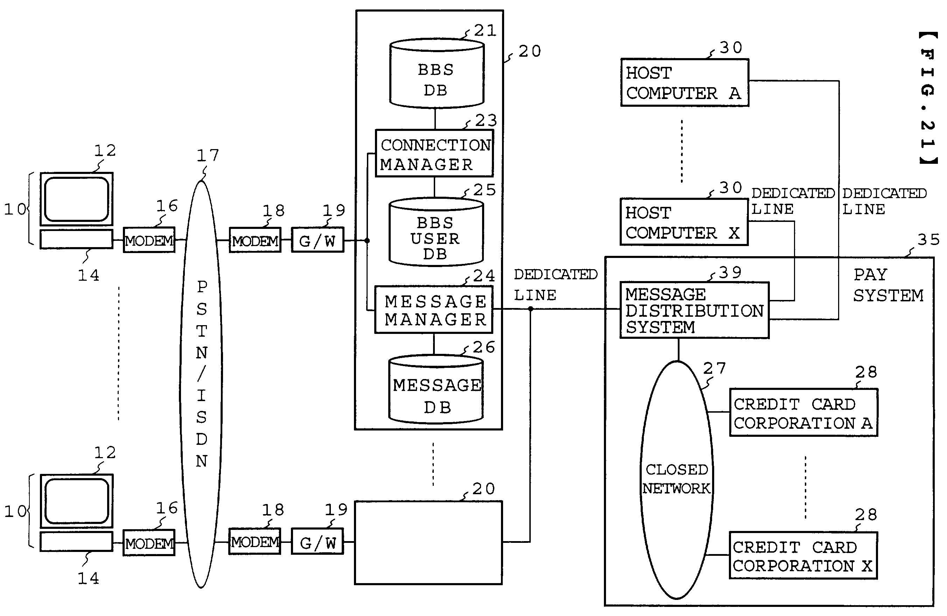

Fig. 21 shows the system structure of the eighth embodiment. In this embodiment, the information provider 20 functions as a BBS, such as Niftyserve™ or Compuserve™. The connection manager 23 is connected to the BBS database 21 which stores information within the BBS, and the provider user database 25 which stores BBS user information. Other structure is the same as the structure shown in Figs. 2 through 10 in association with the first embodiment. However, in this embodiment, the browser 74 receives the BBS information from the connection manager 23 and displays the information.

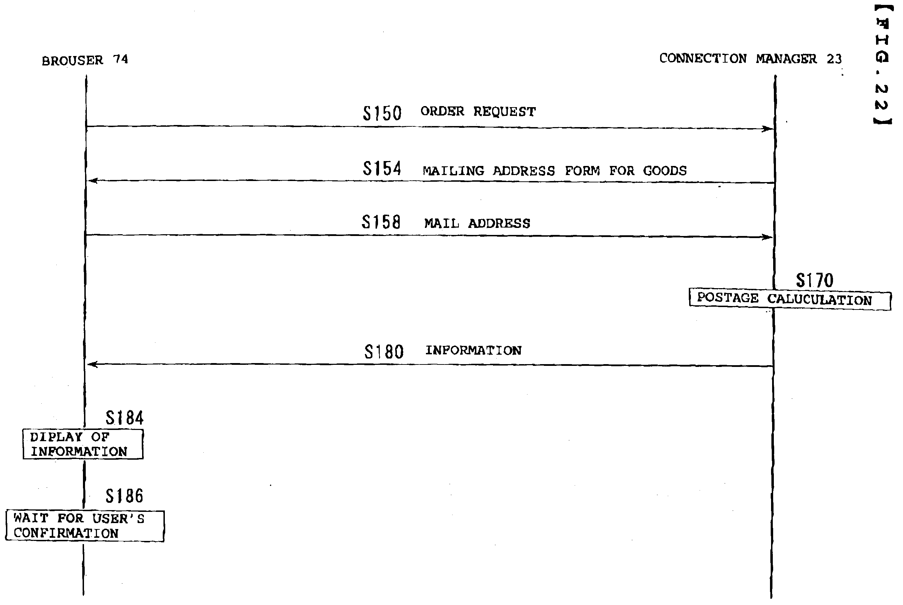

Fig. 22 shows the ordering sequence for the goods. When receiving the order request from the browser 74 (S150), the connection manager 23 requests the browser 74 to transmit the mailing address for the goods (S154). When receiving the mailing address from the browser 74 (S158), the connection manager 23 calculates the postage (S170), and transmits the information representing the price of the goods, postage, tax, total amount, mailing address, and time needed for delivery to the browser 74 (S180). The browser 74 displays the received information (S184) and waits for the user's confirmation (S186). The paying sequence is the same as the sixth embodiment (Fig. 19).

Thus, the paying sequence, which follows the ordering operation for the goods through the BBS, is executed by the message distribution system 39.

### (Others)

Although, in the embodiments 1 through 7, the payment system 35 pays for the goods by credit card, the payment system defined by the appended claims covers any system which has a function to pay the store for the goods. For example, the system may transfer money from the user's bank account to the store, or withdraw from the user's account to the bank account of the payment system, and then, transfer to the store.

Although, in the embodiments, the browser 74 displays the home page information of World Wide Web 32, the browser 74 may provide World Wide Web telephone or World Wide Web TV phone which communicates with voice sound through World Wide Web.

Although the 833, the message user database 34, the transmittal condition database 36 and the connection log 38 are shown as independent disc devices, they may be stored in a single disc device. The mutual relationship among the data of the respective fields can be realized by various file structures. For example, the message user database 34, the transmittal condition database 36 and the connection log 38 may be arranged in the different areas of a single file.

The browser window and the message display module window may be arranged in the vertical direction on the display 12. The browser 60 and the message viewer 76 window may be formed as a signal unit, and one window may be divided into two areas. If this is a case, the information received from World Wide Web 32 and the information received form the message manager 24 may be incorporated in a single unit, and the window may be divided into two areas. If this is a case, information received from World Wide Web 32 and information received from the message manager 24 are separately displayed in the respective areas in the signal window.

In the floppy disk 56 or the CD-ROM 58 as an example of the recording medium, a portion or all functions of the operation flow of the terminal 10, which has been described above, can be stored. The floppy disk 56 may store a portion or all function of the other operation flow. These programs may be read out from the recording medium directly to the RAM for implementation.

The recording medium used in the invention may include optical recording medium, such as a DVD, magnetic recording medium, such as an MD, magneto-optical recording medium, such as a PD, tape medium, and semiconductor memory, such as an IC card and a miniature card, other than floppy disk and CD-ROM. These recording medium are used exclusively to manufacture the terminal 10, the message manager 24 or the message distribution system 39. Therefore, it is obvious that make and sale of such recording media will construct infringement against a patent right based on the present invention.

Although the present invention has been described in conjugation with specific embodiments, the present invention is not limited to the embodiments. Many modifications and substitutions are apparent for those skilled in the art without departing from the spirit and the scope of the invention, which is defined by the appended claims.

Even if the user made an order for goods through a host computer, which is connected to an open network, such as World Wide Web, verification of the credit card is executed through a private line without using the open network. This can prevent hacking and improper use of the credit card information.

## Claims

1. A terminal having a browser for communicating with World Wide Web, comprising:
a message viewer for communicating with a private network; and
a communication means through which said browser communicates with said World Wide Web and said message viewer communicates with said private network using different logical links, wherein:
said browser includes means for ordering goods from a host computer connected to said World Wide Web, means for receiving a bill for said goods from said World Wide Web, and means for transmitting said bill to said message viewer, and
said message viewer includes means for paying said bill through said private network.

2. The terminal according to claim 1, wherein,
said message viewer further includes:
means for receiving information indicative of payment completion from said private network; and
means for transmitting said information indicative of payment completion to said browser, and
said browser includes means for notifying said payment completion to said host computer through said World Wide Web.

3. A terminal having a browser for communicating with World Wide Web, comprising:
a message viewer for communicating with a private network; and
a communication means through which said browser communicates with said World Wide Web and said message viewer communicates with said private network using different logical links, wherein:
said message viewer includes means for ordering goods through said private network, means for receiving a bill for said goods from said private network, payment means for paying said bill through said private network, and means for transmitting information that said order and said payment have been completed to said browser; and
said browser notifies said completion of said order and said payment to said World Wide Web.

4. The terminal according to claim 3,
wherein payment means of said message viewer transmits a credit card number and an expiration date of a user of said terminal to said private network.

5. An information provider having a gateway through which a terminal accesses World Wide Web, and a connection manager which manages a communication through said gateway, comprising:
a message manager which communicates with said terminal independently from said gateway, wherein:
said gateway includes means for transmitting said goods order input through said terminal to a host computer connected to said World Wide Web; and means for transmitting a price information of said goods from said host computer through said World Wide Web to said terminal, and
said message manager is connected to a payment system which enables payments through a private line, and said message manager includes means for receiving said price information from said terminal, and request means for requesting through said private line said payment system to pay an amount indicated by said price information.

6. The information provider according to claim 5, wherein:
said message manager further includes means for receiving information indicative of payment completion from said payment system; and
said gateway includes means for notifying said payment completion to said host computer through said World Wide Web.

7. An information provider having a World Wide Web gateway through which a terminal accesses World Wide Web, a connection manager for managing a communication conducted through said gateway, and a message manager which communicates with said terminal independently from said gateway, wherein:
said message manager is connected to a payment system which allow payments through a private line;
said message manager includes means for transmitting a goods order, input through said terminal, to said payment system, means for transmitting a bill for said goods order from said payment system to said terminal, request means for requesting said payment system through said private line to pay said bill, means for receiving information indicative of payment completion from said payment system, and means for notifying said gateway said information indicative of payment completion; and
said gateway includes means for notifying of said payment completion to a host computer through said World Wide Web.

8. The information provider according to claim 7, wherein:
said message manager further includes means for transmitting said payment completion to said connection manager; and
said connection manager has means for having said gateway notify said host computer of said payment completion.

9. The information provider according to claim 8, wherein:
said request means transmits a credit card number and an expiration date of a credit card held by a user of said terminal to said payment system.

10. A system for paying for goods ordered through World Wide Web by a user of a terminal accessing said World Wide Web, said system comprising:
a user database for storing a credit card number and an expiration date of a credit card owned by said user;
an interface for connecting to a closed network which executes a payment by a credit card;
means for communicating with said terminal using a private network, which is logically independent from a communication established between said World Wide Web and said terminal;
means for receiving information indicative of a paying request, an amount of payment and a store dealing in said goods from said terminal through said private network;
means for reading said credit card number and said expiration date from said user database;
means for transmitting said information indicative of said amount of payment and said store dealing in said goods, together with said credit card number and said expiration date to said private network; and
means for receiving information indicative of that said credit card has been verified.

11. A system for paying for goods ordered by a user of a terminal through a network, comprising:
a user database for storing a credit card number and an expiration date of a credit card owned by said user;
an interface for connecting to a closed network which executes a payment by a credit card;
means for connecting to said terminal using a private network, which is logically independent from communication established between said terminal and said World Wide Web;
means for receiving from said terminal, through said private network, an order for said goods to store which is dealing in said goods;
means for transmitting a bill for said order to said terminal through said private network;
means for receiving a confirmation about said bill from said terminal through said private network;
means for reading out said credit card number and said expiration date from said user database; and
means for receiving information indicative of that said credit card has been verified from said closed network.

12. The system according to claim 11, further comprising:
a store database for storing a store name, which deals in goods, in association with said connection address of said host computer of said store;
means for reading out said connection address of said host computer, which is identified by said store name, from said store database;
means for connecting to said host computer using said connection address through said private line; and
means for notifying said host computer of said information indicative of that said credit card has been verified through said private line.

13. A recording medium which stores a program for working on CPU of a terminal connected to a public network, said program comprising:
a browser module for causing said CPU to communicate with World Wide Web; and
a message viewer module for causing said CPU to communicate with a private network through a logical line which is independent from a communication established between said browser module and said World Wide Web, wherein:
said browser module includes means for causing said CPU to give an order for goods to a host computer connected to said World Wide Web; means for causing said CPU to receive a bill for said goods from said World Wide Web; and means for causing said CPU to transmit said bill to said message viewer; and
said message viewer module includes means for causing said CPU to execute a payment for said goods using said private network.

14. The recording medium according to claim 13, wherein:
said message viewer module further includes means for causing said CPU to receive information indicative of payment completion from said private network; and means for causing said CPU to transmit said payment completion to said browser module; and
said browser module further includes means for causing said CPU to notify said host computer of said payment completion through said World Wide Web.

15. A recording medium which stores a program for working on CPU of a terminal connected to a public network, said program comprising:
a browser module for causing said CPU to communicate with World Wide Web; and
a message viewer module for causing said CPU to communicate with a private network, wherein
said message viewer module includes means for causing said CPU to give an order for goods to said private network, means for causing said CPU to receive a bill for said goods from said private network, means for causing said CPU to execute payment for said goods through said private network, and means for causing said CPU to indicate that said order and said payment have been completed to said browser; and
said browser module includes means for causing said CPU to notify said World Wide Web of said completion of said order and said payment.

16. The recording medium according to claim 15 wherein:
said message viewer module causes said CPU to transmit a credit card number and an expiration date of a credit card held by a user of said terminal user to said private network during said payment process.
